Europäisches Patentamt

European Patent Office

Office européen des brevets

(11) Publication number: **0 111 093**
**A2**

(12) # EUROPEAN PATENT APPLICATION

(21) Application number: **83110089.6**

(22) Date of filing: **10.10.83**

(51) Int. Cl.³: **G 01 K 7/24**
**G 01 K 1/02, G 01 K 13/00**

(30) Priority: **04.11.82 SE 8206268**

(43) Date of publication of application:
**20.06.84 Bulletin 84/25**

(84) Designated Contracting States:
**AT BE CH DE FR GB IT LI LU NL**

(71) Applicant: **Gambro Crafon Aktiebolag**
**Box 10101**
**S-220 10 Lund(SE)**

(72) Inventor: **Hakanson, Bo Hakan**
**Astrakanvägen 6**
**S-223 56 Lund(SE)**

(72) Inventor: **Hällje, Per Lennart**
**Lerakersvägen 12**
**S-240 14 Veberöd(SE)**

(72) Inventor: **William-Olsson, Göran**
**Hökegardsgatan 53**
**S-431 38 Mölndal(SE)**

(74) Representative: **Boberg, Nils Gunnar Erik**
**Gambro AB Patent Department Box 10101**
**S-220 10 Lund(SE)**

(54) Medical temperature indicator.

(57) A medical temperature indicator comprising a temperature-sensitive sensor (2) whose electrical characteristics, e.g. the resistance, vary with the temperature, e.g. a thermistor, and a display (4A,4B). The indicator is constituted of a unit designed in one piece consisting of an insertable part (1) comprising the sensor (2) and a converter part (3) which in itself contains all the electrical components which are required for a conversion of the change of the said characteristic to a signal which can be read off a display outside the converter part.

The said display (4A,4B) appropriately is of a type comprising a liquid crystal which is adapted to be energized as a function of the temperature picked up by the sensor (2) and to show one or more colour signals.

Fig.1

TITLE

MEDICAL TEMPERATURE INDICATOR


TECHNICAL FIELD

The present invention relates to a medical temperature indicator, comprising a temperature-sensitive sensor whose electrical characteristics, e.g. the resistance, vary with the temperature, e.g. a thermistor, and a display.

The indicator in accordance with the invention is intended first and foremost to be used in heart operations and on similar occasions, where the available space is limited, but where nevertheless an easily observable temperature indication is desirable and this without interference by bulky arrangements or any disturbing leads.

To those versed in the art it will be clear, however, that the subject of the invention can also be used advantageously in other cases where a clear and rapid temperature indication is desired. Thus the indicator in accordance with the invention can be inserted advantageously into a blood vessel belonging to an extracorporeal circulation to indicate the temperature in the same.


BACKGROUND ART

To a certain extent the subject of the invention can be compared to an ordinary meat thermometer intended for the preparation of food. As far as we are aware, however, no such device has been adapted to medical temperature measurement.

For such medical temperature measurements very special requirements are made. Thus it is required, for example, of an indicator intended for measuring the temperature in the heart during a heart operation that it should take up as little space as possible, at the same time as the indication should still be clear even in the very bright operating light. Furthermore no flexes or wires must lead up to the operating place. If possible, moreover, the indicator should show a lower temperature limit as well as an upper temperature limit. Furthermore, very high demands are made from a point of view of hygiene. Finally, it must not be possible to misinterpret the signal given.

DISCLOSURE OF INVENTION

The abovementioned problem is solved in accordance with the invention in that a temperature indicator of the aforementioned type is designed in one piece as a unit consisting of an insertable part comprising the sensor and a converter part which contains in itself all the electrical components required for the conversion of the change in the said characteristic to a signal which can be read off a display outside the converter part. Also included in this definition is the energy source, e.g. a battery, which is required for the activation of the other electrical components.

The display is preferably adapted so that it transmits a colour signal. This can be realized for example in that the said display is of a type comprising a liquid crystal which is adapted so as to be energized as a function of the temperature picked up by the sensor. Such a liquid crystal may have the characteristic that it can be clearly read in strong as well as in weak light.

The said display is suitably adapted so that it transmits different colour signals when a certain temperature limit is not reached and when the same or some other temperature limit is exceeded respectively. This may be realized for example in that the said display comprises at least two different panels covered by different liquid crystals. It has been found appropriate for the device to show one colour, e.g. red, when a certain temperature is exceeded, another colour, e.g. blue, when a lower temperature is not reached, and both the said colours in the region between the said temperatures.

Preferably the said sensor is connected between a battery pole and earth and is adapted to be compared with one or more known and/or adjustable resistors connected between the same battery pole and earth. It is of minor importance here whether the battery voltage gradually diminishes. The comparison is done at any rate at the same battery voltage throughout.

In a practical embodiment of the subject of the invention the sensor is connected in series with a known or adjustable resistor parallel with two other known and/or adjustable resistors, means being provided for comparing the voltages at the points between the sensor and the firstnamed resistor and between the two lastnamed resistors connected in series respectively.

If two temperature limits are to be picked up, the sensor and the resistor coupled in series therewith are also connected in parallel with two further known and/or adjustable resistors connected in series, means being provided for comparing the voltages at the points between the sensor and the firstnamed resistor and between the two lastnamed resistors connected in series respectively.

The liquid crystal is activated preferably by means of an oscillating circuit which is adapted so as to transmit a signal to the said display as a function of the temperature picked up by the sensor.

BRIEF DESCRIPTION OF DRAWINGS

Fig.1 shows a preferred embodiment of the indicator in accordance with the invention.

Fig.2 shows schematically a connection diagram for the electrical components incorporated in the indicator according to fig.1

Fig.3 - 3E finally show the voltage at different points in the connection diagram according to fig.2 at a temperature increasing with time.

BEST MODE OF CARRYING OUT THE INVENTION

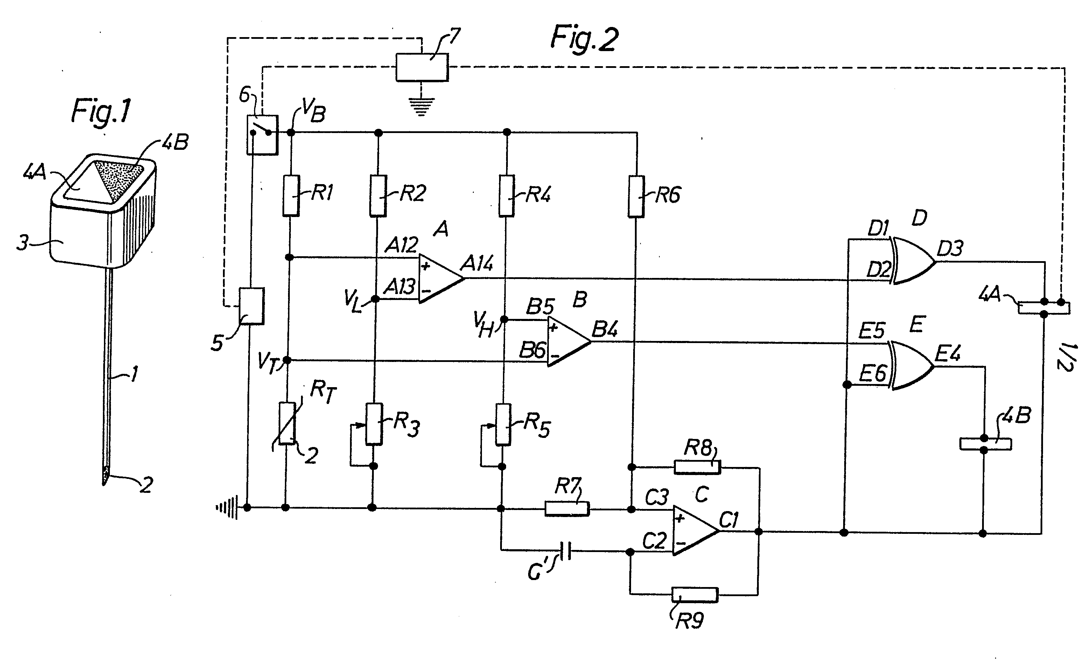

The temperature indicator shown as an example in fig.1 consists of an insertable part 1 which at its tip comprises a sensor 2, e.g. a thermistor. The indicator moreover comprises a converter part 3 which in itself contains all the electrical components required for the conversion of the change of the said characteristic of the sensor 2 to a signal which can be read off a display 4A, 4B outside the converter part. As is evident from the figure, this display is divided into two triangular panels which are formed appropriately by two different liquid crystals. It has been found appropriate here for the panel 4A to consist of a crystal which is of a blue colour when energized, whilst the panel 4B may consist of a crystal which is of red colour when energized. The electrical connection, which is described in more detail in the following, can be arranged so that the indicator shows a blue signal below a lower temperature limit and a red signal above a higher temperature limit and a combined red/blue signal between these temperature limits. The indicator shown in fig.1 thus comprises all the electrical components which are shown in fig.2.

PREFERRED ELECTRICAL CONNECTION

In fig.2 accordingly is shown schematically a preferred embodiment of an electrical connection diagram for the indicator shown in fig.1.

The thermistor 2 serving as a sensor is arranged here between earth and the point $V_T$ and is connected in series with a known resistor R1 which in turn is connected to the battery pole $V_B$. Parallel with the thermistor 2 and the resistor R1 a known resistor R2 is connected in series with an adjustable resistor R3. This resistor too is connected consequently between the battery pole $V_B$ and earth.

In the same manner a further known resistor R4 is connected in series with an adjustable resistor R5 between the battery pole $V_B$ and earth.

With the help of an operational amplifier A the voltages can be compared at the points $V_L$ and $V_T$, and with the help of an operational amplifier B the voltages can be compared between the points $V_H$ and $V_T$.

The resistance of the thermistor 2 accordingly is changed with the temperature. Thus if the temperature increases, the voltage $V_T$ drops, since the resistor R1 is not altered with temperature.

Ohm's law gives $V_T = V_B \left( \dfrac{R_T}{R_1 + R_T} \right)$

In the same manner the voltages $V_1$ and $V_H$ and be calculated:

$$V_L = V_B \left( \frac{R_3}{R_2 + R_3} \right)$$

$$V_H = V_B \left( \frac{R_5}{R_5 + R_4} \right)$$

Since $R_3$ and $R_5$ are variable resistors, $V_L$ and $V_H$ can be adjusted therefore to the desired value.

The operational amplifier A compares the voltages $V_T$ and $V_L$. When $V_T$ exceeds $V_L$ the output A14 is high. When $V_T$ is smaller than $V_L$ the output A14 is low.

In the same manner the operational amplifier B compares the voltages $V_T$ and $V_H$, but here the positive and negative input are changed in relation to the operational amplifier A, so that the output $B_4$ will be low when $V_T$ exceeds $V_H$.

A third operational amplifier C is connected as an oscillator with an oscillation frequency of approx. 30 Hz. This circuit also includes the resistors R6, R7, R8 and R9 together with the capacitance C'. The output C1 from the operational amplifier C is connected to the inputs D1 and E6 of two further circuits D and E. To the other inputs D2 and E5 of these logical circuits are connected the outputs A14 and B4 respectively from the amplifiers A and B.

The circuits D and E are so-called exclusive OR gates, the output X of which is determined by the form $X = \bar{A}B + A\bar{B}$. $\bar{A}$ is here the inverse of A, and $\bar{B}$ is the inverse of B. This leads to the result that D inverts the signal from the output C1 of the amplifier C when the output A14 on the amplifier A is high. In the same manner E inverts the signal from the output C1 of the amplifier C when the output B4 on the amplifier B is high.

To make possible an extended storage time, a contact circuit 6 may be arranged between the battery 5 and the outgoing battery pole $V_B$. This contact circuit may be constituted of a simple contact which is mechanically acted upon by a relative movement, e.g. a rotation or shifting between the insertable part 1
and the converter part 3. Preferably, however, it consists
instead of a so-called touch-control circuit 7 which in turn can
be controlled by either of the two display crystals 4A and 4B.
These crystals, in fact, can be so sensitive that a simple touch
changes their capacitance or gives rise to other disturbances
which can be picked up by the circuit 7 in order to manoeuvre the
contact circuit 6. The control circuit 7 may be controlled by
such small currents that it is possible more or less to disregard
its energy consumption up to when the contact circuit 6 is
activated.

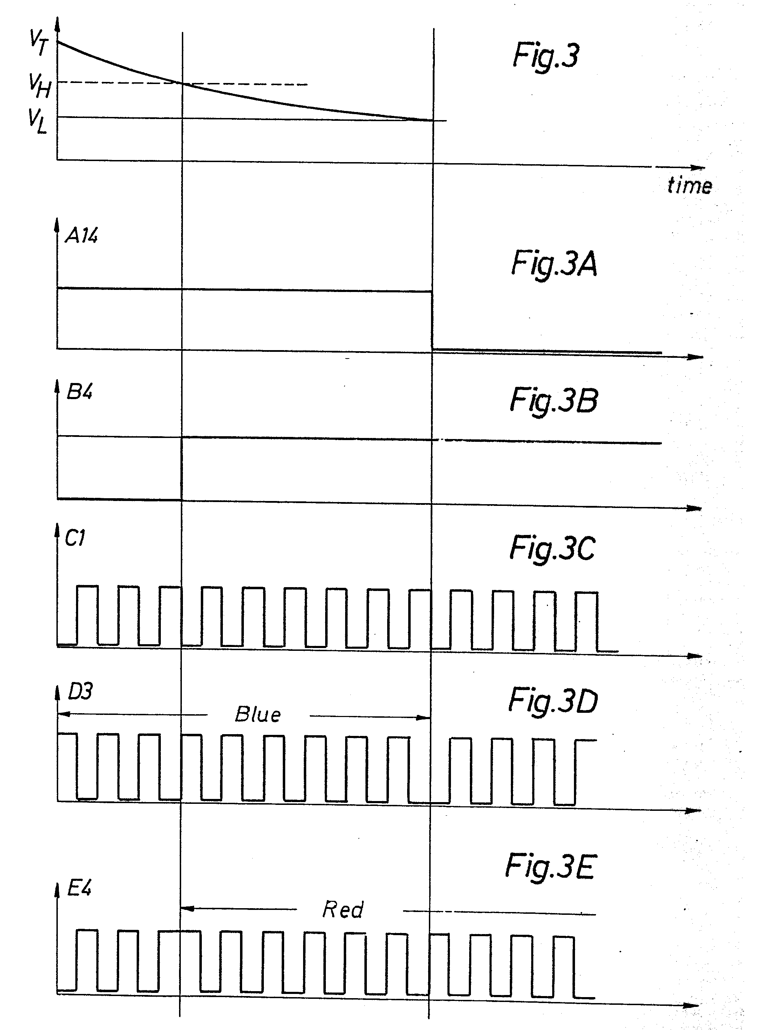

For a better understanding of the connection diagram according to fig.2, reference is made to fig.3 - 3E, which demonstrate
what occurs as the temperature of the thermistor 2 increases.
When the temperature rises, the voltage $V_T$ drops and after a time
reaches the value $V_H$. This is shown in fig.3. In fig.3A and 3B
is shown how at the same time the output A14 is high and the
output B4 is low. When the temperature rises further, $V_T$ dimin-
ishes gradually to the value $V_L$, as can be seen in fig.3. When
this limit has been reached the output A14 is extinguished at the
same time as the output B4 remains as high as it was after the
limit $V_H$ had been passed.

During this time the output C1 transmits all the time the
signal shown in fig.3C. This signal together with the signal
from the output A14 gives rise to a signal D3 in accordance with
fig.3D. If fig.3C and 3D are compared it is found that the signals shown in these figures are out of phase as long as $V_T$
exceeds $V_L$. By connecting these signals to the respective poles
of the blue crystal, a blue signal can be obtained on the indicator. When $V_T$ reaches the value $V_L$, the relationship is changed
so that the signals C1 and D3 come in phase, as a result of which
the blue signal is extinguished.

If the signals C1 and E4 are compared instead it is found
that they are in phase during the lower temperature and get out
of phase when $V_T$ reaches the value $V_H$ and when consequently the red signal is lit.

Naturally the invention is not limited to the connection diagram shown in fig.2 or the functional diagrams shown in fig.3 - 3E, but can be varied within the scope of the following claims. Those versed in the art are at liberty, for example, to choose other oscillating circuits or amplification circuits for the activation of the crystals 4A and 4B.

CLAIMS

1. A medical temperature indicator comprising a temperature-sensitive sensor (2) whose electrical characteristics, e.g. the resistance, vary with the temperature, e.g. a thermistor, and a display (4A,4B), c h a r a c t e r i z e d  by a unit designed in one piece consisting of an insertable part (1) containing the sensor (2) and a **converter**  part (3), which in itself contains all the electrical components required for a conversion of the change of the said characteristic to a signal which can be read off a display outside the converter part.

2. A temperature indicator in accordance with claim 1, c h a r a c t e r i z e d  in that the said display (4A,4B) is adapted to transmit a colour signal.

3. A temperature indicator in accordance with claim 1 or 2, c h a r a c t e r i z e d  in that the said display (4A,4B) is adapted to indicate different signals when a certain temperature limit is not reached and when the same or another temperature limit is exceeded respectively.

4. A temperature indicator in accordance with claim 3, c h a r a c t e r i z e d  in that the said display (4A,4B) is adapted to show a colour, e.g. red, when a certain temperature limit is exceeded, another colour e.g. blue, when a lower temperature limit is not reached, and both the said colours within the region between the said temperatures.

5. A temperature indicator in accordance with anyone of the preceding claims, c h a r a c t e r i z e d  in that the said sensor (2) is connected between a battery pole ($V_B$) and earth and is adapted to be compared with one or more known and/or adjustable resistors (R2 - R5) connected between the same battery pole ($V_N$) and earth.

6. A temperature indicator in accordance with claim 5, c h a r a c t e r i z e d  in that the sensor (2) is connected in series with a known or adjustable resistor (R1) parallel with two other known and/or adjustable resistors (R2,R3) connected in series, means (A) being provided for comparing the voltages

($V_T$ and $V_L$) at the points between the sensor (2) and the first-named resistor (R1) and between the two lastnamed resistors (R2,R3) connected in series respectively.

7. A temperature indicator in accordance with claim 6, c h a r a c t e r i z e d in that the sensor (2) and the resistor (R1) connected in series therewith are also connected in parallel with two further known and/or adjustable resistors (R4,R5) connected in series, means (B) being provided for comparing the voltages ($V_T$ and $V_H$) at the points between the sensor (2) and the firstnamed resistor (R1) and between the two lastnamed resistors (R4,R5) connected in series respectively.

8. A temperature indicator in accordance with anyone of the preceding claims, c h a r a c t e r i z e d in that the said display (4A,4B) is of a type comprising a liquid crystal which is adapted to be energized as a function of the temperature picked up by the sensor (2).

9. A temperature indicator in accordance with claim 8, c h a r a c t e r i z e d in that the said display comprises at least two different panels (4A,4B) covered by different liquid crystals.

10. A temperature indicator in accordance with claim 5, c h a r a c t e r i z e d by an oscillating circuit (C,C', R6 - R8) connected between the same battery pole ($V_B$) and earth which is adapted so as to transmit a signal to the said display (4A,4B) as a function of the temperature picked up by the sensor (2).

11. A temperature indicator in accordance with anyone of the preceding claims, c h a r a c t e r i z e d by a contact circuit (6) connected between the said sensor (2) and its energy source, e.g. a battery (5).

12. A temperature indicator in accordance with claim 11, c h a r a c t e r i z e d in that the said contact circuit (6) is adapted to be controlled by a touch-control circuit (7) which in turn is adapted to be controlled by the said display (4A and/ or 4B).

Fig.1

Fig.2

Fig.3

Fig.3A

Fig.3B

Fig.3C

Fig.3D

Fig.3E